Europäisches Patentamt

European Patent Office

Office européen des brevets

(11) Veröffentlichungsnummer: **0 194 467**
**B1**

## EUROPÄISCHE PATENTSCHRIFT

(45) Veröffentlichungstag der Patentschrift:
**24.08.88**

(21) Anmeldenummer: **86101950.3**

(22) Anmeldetag: **15.02.86**

(51) Int. Cl.⁴: **F 28 F 11/06**, F 22 B 37/00

(54) **Einrichtung zum Einbringen einer Hülse in ein Rohr eines Dampferzeugers.**

(30) Priorität: **14.03.85 DE 3509177**

(43) Veröffentlichungstag der Anmeldung:
**17.09.86 Patentblatt 86/38**

(45) Bekanntmachung des Hinweises auf die Patenterteilung:
**24.08.88 Patentblatt 88/34**

(84) Benannte Vertragsstaaten:
**BE CH FR IT LI NL SE**

(56) Entgegenhaltungen:
**EP - A - 0 131 792**
**DE - A - 3 122 660**
**DE - A - 3 218 549**
**FR - A - 2 442 678**

(73) Patentinhaber: **BROWN,BOVERI REAKTOR GmbH,
Dudenstrasse 44, D-6800 Mannheim 1 (DE)**

(72) Erfinder: **Haller, Hans, Dipl.-Ing. (FH), Am Sonnengarten,
D-6800 Mannheim 1 (DE)**

(74) Vertreter: **Kempe, Wolfgang, Dr. et al, c/o BROWN,
BOVERI & CIE AG ZPT Postfach 351,
D-6800 Mannheim 31 (DE)**

ACTORUM AG

## Beschreibung

Die Erfindung betrifft eine Einrichtung zum Einbringen einer Hülse in ein Rohr eines Dampferzeugers, das in einem von einer Kammer begrenzten Rohrboden endet, die über eine Öffnung zugänglich ist, wobei die Einrichtung aus einer relativ zum Rohrboden festlegbaren Halteplatte und einer entlang dieser Halteplatte in Achsrichtung des Rohres bewegbaren Haltevorrichtung für die Hülse besteht.

Eine derartige Einrichtung ist aus der DE-A-3 122 660 bekannt. Dort ist ein fernbedient in eine Dampferzeugerkammer einbringbarer Manipulator zur Inspektion oder Reparatur von Dampferzeugerrohren angegeben. Werkzeuge und Prüfsonden werden in einem Führungsschlauch an die zu prüfenden Rohre herangeführt. Würde auf den Geräteträger eine Haltevorrichtung für eine in ein Dampferzeugerrohr einzuführende Hülse angeordnet, so würde wegen der Höhe des Trägers und wegen der vor dem Einführvorgang vom Träger in Richtung Rohrboden ragenden Hülse die mögliche Länge der einzuführenden Hülsen erheblich reduziert.

Es ist daher die Aufgabe der Erfindung, eine Einrichtung der eingangs genannten Art anzugeben, die das Einführen von längeren Hülsen ermöglicht.

Gelöst wird diese Aufgabe erfindungsgemäss dadurch, dass die bewegbare Haltevorrichtung Spannbacken aufweist und in die Halteplatte eine stationäre Spannvorrichtung integriert ist, deren Spannstücke die gleiche Mittenachse wie die Spannbacken der bewegbaren Haltevorrichtung aufweisen und die zur Aufnahme einer Hülse durch federnde Druckstücke mit senkrecht zur Mittenachse wirkender Federkraft betätigbar ist, dass die Spannbacken der bewegbaren Haltevorrichtung 25 einen dem Rohrboden zugewandten abgesetzten Teilbereich aufweisen und bei nicht im Spannbereich befindlicher Hülse soweit zusammenfahrbar sind, dass der Aussendurchmesser dieses Teilbereiches grösser als der Innendurchmesser und gleich gross wie der Aussendurchmesser eines Rohres ist.

Die Haltevorrichtung übergibt also mit einem Einbringhub die Hülse an eine stationär angeordnete Vorrichtung, die die Hülse während eines Rückhubes der Haltevorrichtung festhält. Durch das Einbringen in mehreren Teilhüben kann die in Achsrichtung der Dampferzeugerrohre bewegbare Haltevorrichtung eine geringe Bauhöhe aufweisen, so dass auch bei einer kugelförmig ausgebildeten Kammer entsprechende Hülsen noch an nahe der Peripherie befindlichen Rohrpositionen problemlos eingeschoben werden können. Da das Gehäuse der Haltevorrichtung in Achsrichtung von der Hülse durchsetzt ist, wird die noch verbleibende Bauhöhe der Haltevorrichtung nahezu keinen Einfluss auf die einsetzbare Hülsenlänge haben. Mit dem Zusammenfahren der Spannbacken der Haltevorrichtung bei nicht im Spannbereich befindlicher Hülse wird sichergestellt, dass zum Einbringen der Hülse in ihre Endposition die zusammengefahrenen Spannbacken die Hülse untergreifen, mit ihren Stirnseiten die Stirnseite der Hülse kontakten und beim letzten Teilhub die Spannstücke der stationären Spannvorrichtung mit Sicherheit auseinanderdrücken und durchfahren können.

Vorzugsweise trägt die Halteplatte einen kolbenstangenlosen druckmittelbetätigten Zylinder, dessen Kolben über eine umfangsseitig vom Zylinder auskragende Konsole mit der in Achsrichtung der Dampferzeugerrohre bewegbaren Haltevorrichtung lösbar verbunden ist. Durch die Verwendung der Halteplatte sowohl zur Aufnahme der stationär ausgebildeten Spannvorrichtung als auch zum Halten der in Achsrichtung der Dampferzeugerrohre bewegbaren Haltevorrichtung wird eine kompakte, gewichtssparende Einrichtung geschaffen. Mit der lösbaren Verbindung zwischen der Konsole und der Haltevorrichtung ist die leichte Austauschbarkeit der Spannvorrichtung gegen eine andere Vorrichtung, z.B. zum Schweissen der Hülsen, gewährleistet.

Gemäss einer anderen Ausbildung ist die stationär angebrachte Spannvorrichtung in einem Einsatz angeordnet, der an der Haltevorrichtung lösbar befestigt ist. Der nach Herausnahme dieses Einsatzes gebildete Freiraum erlaubt das Heranführen eines Werkzeuges oder einer Prüfvorrichtung an eine Rohrposition. Ein solches Werkzeug kann in der in Achsrichtung der Dampferzeugerrohre bewegbaren Haltevorrichtung gehalten oder anstelle dieser Haltevorrichtung am Zylinder befestigt werden.

Um den relativ zur Rohrplatte festlegbaren Teil der Einrichtung am Innen- oder Aussenumfang des Dampferzeugerrohres zentrieren zu können wird vorgesehen, dass die Halteplatte mit auswechselbaren Zentrierelementen und/oder einem Spreizfinger bestückt ist.

Zur Erzielung einer exakten Führung der Spannstücke senkrecht zur Hülsenachse wird vorgesehen, dass jedes Spannstück schalenförmig ausgebildet ist und von seiner Aussenkontur auskragende Gleitstücke aufweist, die in Führungsschlitze der Halteplatten ragen.

Zur Gewährleistung einer exakten Führung der Spannbacken wird vorgeschlagen, dass die Spannbacken in einem Gehäuse der in Achsrichtung der Rohre bewegbaren Haltevorrichtung angeordnet sind und während ihrer Verstellbewegung relativ zum Gehäuse der Haltevorrichtung formschlüssig geführt sind.

Vorzugsweise ist die Einrichtung über einen am Zylindermantel angreifenden Kupplungsteil von einem in der Kammer befindlichen Manipulator oder von einem Spreizfinger getragen der von der Halteplatte auskragend in ein Dampferzeugerrohr ragt.

Ein Verfahren zum Einbringen der Hülse mit einer erfindungsgemässen Einrichtungen zeichnet sich durch nachfolgende Schritte aus:

a) die Hülse wird durch die Öffnung in der Dampferzeugerkammer bei geöffneten Spannbacken der vertikal bewegbaren Haltevorrichtung so weit eingeschoben, bis die Hülse mit einem vorgebbaren Bereich in Richtung der stationären Spannvorrichtung über die Spannbacken hinausragt,

b) die Spannbacken werden an die Hülse angelegt und die Haltevorrichtung führt einen Einbringhub aus, bis der über die Spannbacken hinausragende Bereich von den Spannstücken der stationären Spannvorrichtung erfasst wird,

c) die Spannbacken der Haltevorrichtung werden geöffnet, und ein Rückhub der Haltevorrichtung wird durchgeführt,

d) die Spannbacken der Haltevorrichtung werden an die Hülse angelegt, und die Haltevorrichtung führt einen weiteren Einbringhub durch,

e) sobald nach einem Rückhub die Spannbacken der Haltevorrichtung in eine die Hülse untergreifende Stellung zusammengefahren werden, erfolgt ein erneuter Einbringhub und bringt die Hülse in eine mit der Unterkante des Rohrbodens bündige Endstellung.

Anhand eines Ausführungsbeispieles und der Figuren 1 bis 9 wird die erfindungsgemässe Einrichtung beschrieben.

Dabei zeigt die

Fig. 1 einen Längsschnitt durch eine Kammer eines Dampferzeugers mit der Einrichtung,

Fig. 2 eine grösser dargestellte Seitenansicht der Einrichtung, teilweise im Schnitt,

Fig. 3 u. 4 Zentrierelemente und ihre Befestigung in der Einrichtung in einem anderen Massstab,

Fig. 5 eine Einzelheit in Pfeilrichtung V der Figur 2, in einem anderen Massstab,

Fig. 5a eine Teilansicht in Pfeilrichtung 43 der Figur 7, in einem anderen Massstab,

Fig. 6 bis 9 verschiedene Arbeitspositionen der Einrichtung,

Fig. 6a eine Teilansicht in Pfeilrichtung 53 der Figur 2, in einem anderen Massstab.

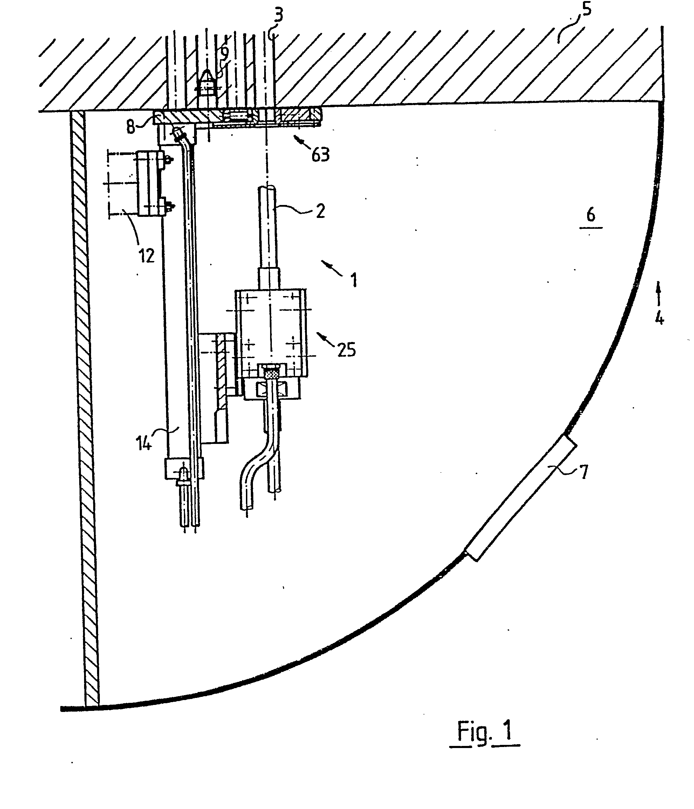

Die Figur 1 zeigt in einer Übersicht die Anordnung einer Einrichtung 1 zum Einbringen einer Hülse 2 in ein Rohr 3 eines Dampferzeugers 4. Von dem Dampferzeuger ist lediglich ein Rohrboden 5, in den mehrere tausend Rohre 3 enden können, und eine an den Rohrboden 5 angrenzende halbkugelförmig ausgebildete Kammer 6 angeordnet. Durch eine Öffnung 7 ist die Kammer 6 und somit auch jedes in der Rohrplatte 5 endende Rohr 3 zugänglich.

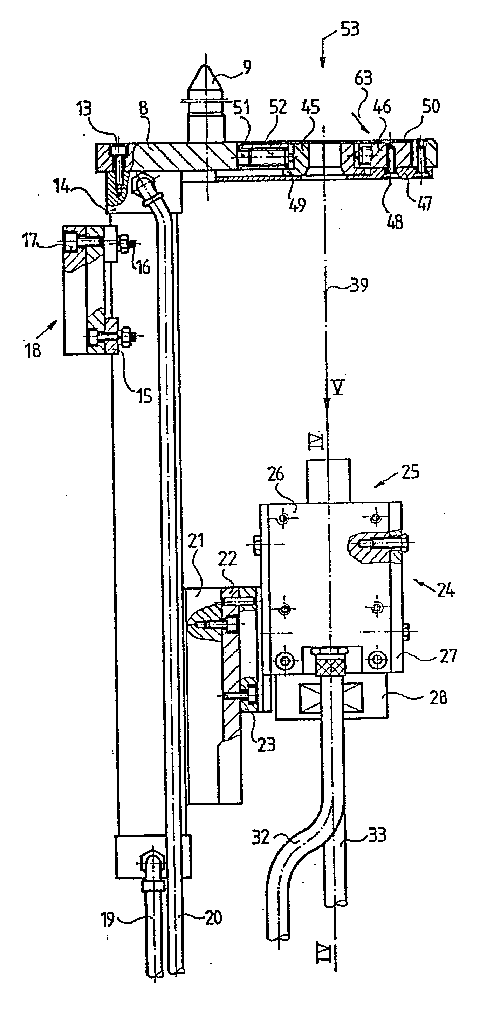

Die in Figur 2 in grösserem Massstab gezeichnete Einrichtung 1 wird über die Öffnung 7 in die Kammer 6 eingebracht und relativ zum Rohrboden 5 festgelegt. Zur Positionierung der Einrichtung 1 sind an einer Halteplatte 8 Zentrierstifte 9 angebracht, die in ein Rohr 3 des Rohrbodens 5 einführbar sind. Die Zentrierstifte 9 können auch durch in der Figur 4 dargestellte Zentrierteller 10 ersetzt werden, die bei entsprechender Gestaltung des Rohrbodens 5 je ein aus dem Rohrboden in die Kammer 6 ragendes Rohr 3 umfangsseitig übergreifen.

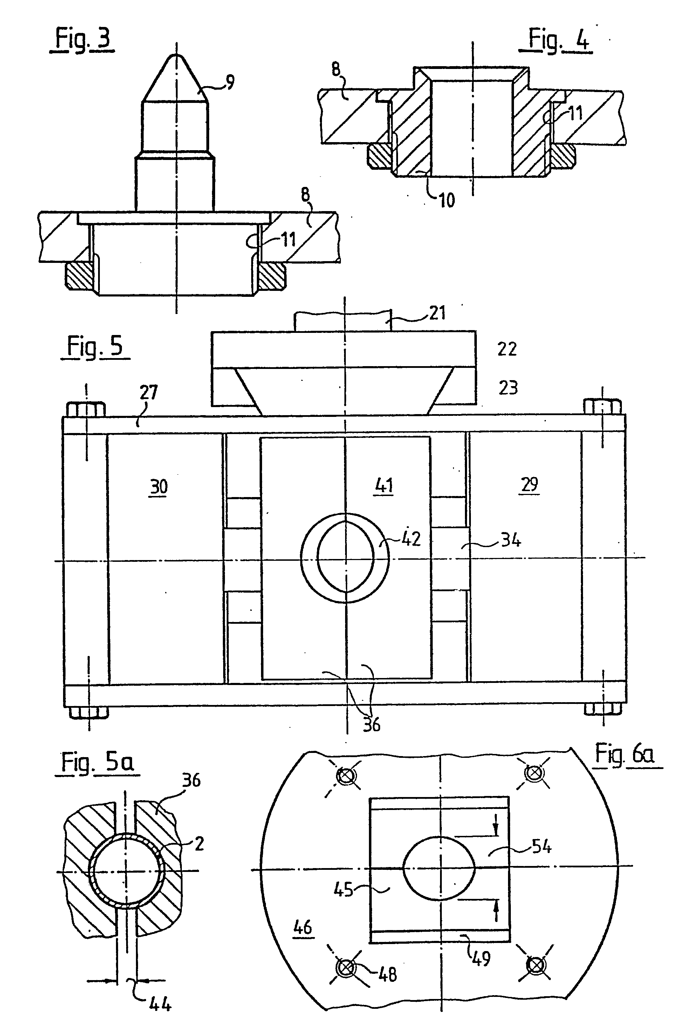

Die Figuren 3 und 4 zeigen, dass die jeweilige Aufnahmebohrung 11 in der Halteplatte 8 für den Zentrierstift 9 und den Zentrierteller 10 gleich ausgebildet sind. Die wahlweise Verwendung eines Zentrierstiftes 9 oder eines Zentriertellers 10 ist daher gegeben. Mit einer Mutter 65 erfolgt die Festlegung von Zentrierstift 9 bzw. Zentrierteller 10 gegenüber der Halteplatte 8. In die Aufnahmebohrung 11 ist auch ein nicht dargestellter Spreizfinger zum Festhalten der Halteplatte 8 relativ zum Rohrboden 5 einsetzbar. In dem Ausführungsbeispiel ist die Einrichtung 1 jedoch von einem ebenfalls in der Kammer 6 angeordneten Manipulator 12 gehalten. Ein mittels Schrauben 13 an der Unterseite der Halteplatte 8 befestigter kolbenstangenloser druckmittelbetätigter Zylinder 14 weist zwei Laschen 15 auf. An ihnen ist über Schrauben 16, 17 ein Kupplungsstück 18 befestigt, das in ein entsprechendes Gegenstück eines in Figur 1 strichpunktiert angedeuteten Manipulators 12 eingreift. Von einem nicht dargestellten Kolben des über zwei Pneumatikanschlüsse 19, 20 steuerbaren Zylinders 14 kragt eine Konsole 21 aus, die unter Zwischenschaltung einer Platte 22 eine Prismenführung 23 trägt. Schraub- und Stiftverbindungen sichern diese Bauteile in ihrer Lage zueinander. Ein Gegenstück der Prismenführung 23 ist einem Gehäuse 24 einer Haltevorrichtung 25 zugeordnet und führt zu einer selbsthemmenden Arretierung zwischen der Haltevorrichtung 25 und der Konsole 21. Die Haltevorrichtung 25 ist somit über den Kolben des Zylinders 14 in Achsrichtung der Rohre 3 bewegbar.

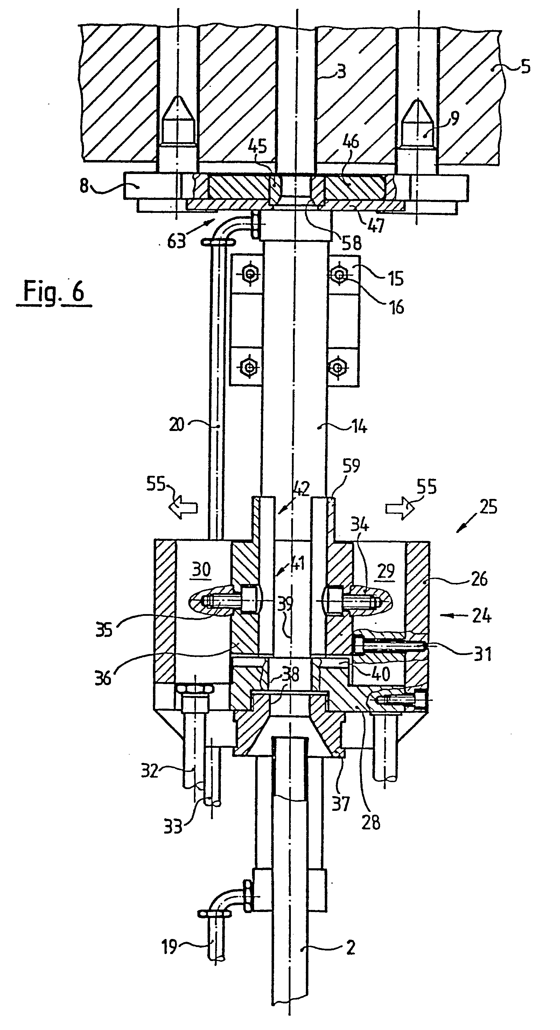

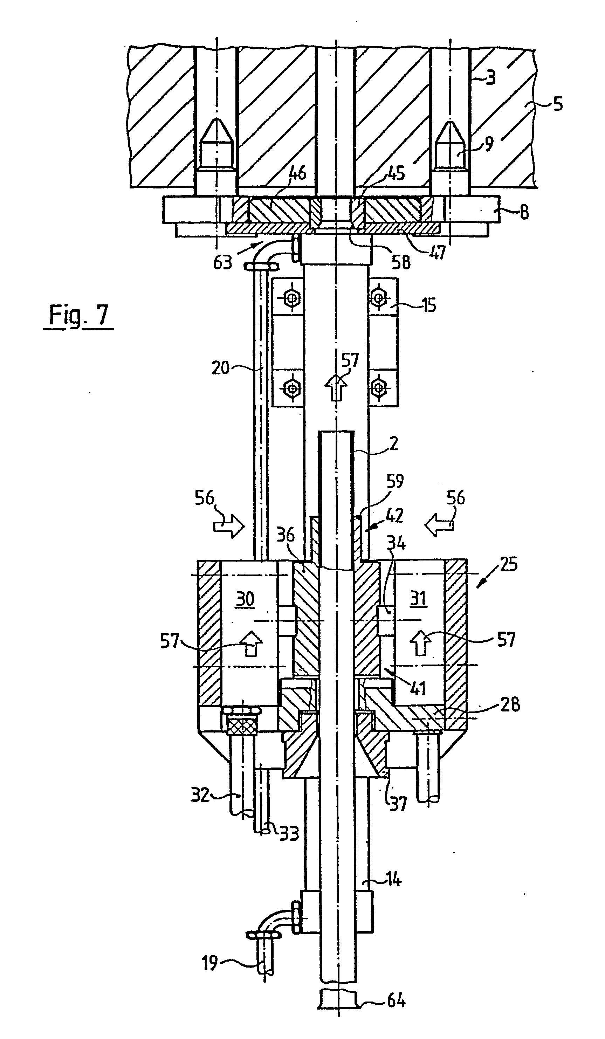

Wie aus den Figuren 6 bis 9, die unter anderem eine entlang der Linie IV-IV der Figur 2 geschnittene Haltevorrichtung 25 zeigen, zu ersehen ist, sind in dem aus Seiten- 26, Frontplatten 27 und einer Grundplatte 28 zusammengeschraubten Gehäuse 24 zwei gegenläufig arbeitende Spannzylinder 29, 30 angeordnet und mittels Schrauben 31 an je einer Seitenplatte 26 befestigt. Ihre Steuerung efolgt über Pneumatikanschlüss 32, 33. Jede Kolbenstange 34 der Spannzylinder 29, 30 trägt über eine Schraube 35 eine schalenförmig ausgebildete Spannbacke 36 zum Halten der Hülse 2. In die Grundplatte 28 ist ein nach unten konisch erweitertes Führungsstück 37 eingeschraubt, das ebenso wie der weitere Verlauf der Grundplatte 28 mit einer Bohrung 38 versehen ist. Die Bohrungen 38 weisen bei gleicher Mittenachse 39 einen so grossen Durchmesser auf, dass die Hülse 2 leicht durchgeführt werden kann, um in den Spannbereich der Haltevorrichtung 25 zu gelangen. Während ihrer Schliess- und Öffnungsbewegungen sind die Spannbacken 36 in einer zwischen ihnen und der Grundplatte 28 bestehenden Nut-/Federverbindung 40 gleitend geführt, so dass ein exakter Bewegungsverlauf gewährleistet ist. Wie in Zusanmmenhang mit der Figur 5, die in Pfeilrichtung V der Figur 2 betrachtet lediglich die vollkommen zusammengefahrenen Spannbacken 36 zeigt, zu ersehen ist, weist der innerhalb des Gehäuses 24 angeordnete Teilbereich 41 der Spannbacken 36 einen rechteckförmigen Querschnitt auf. Der ausserhalb des Gehäuses 24 befindliche Teilbereich 42 der Spannbacke 36 ist derart abgesetzt, dass er denselben Aussendurchmesser aufweist wie ein im Rohrboden 5 endendes Rohr 3. Die Figur 5a zeigt in einer Ansicht in Pfeilrichtung 43 der Figur 7 die Spannbacken 36 mit einer dazwischen eingespannten Hülse 2. Um die dabei mit 44 bezeichnete Schlitzbreite zwischen den Spannbacken 36 sind dieselben weiter zusammen, wenn sie die unter Figur 5 beschriebene Stellung einnehmen. Auf den Zweck dieser Ausbildung wird im weiteren Verlauf der Beschreibung eingegangen.

In Fortführung der Mittenachse 39 der Spannbacken 36 der in Achsrichtung der Rohre 3 bewegbaren Haltevorrichtung 25 sind der Halteplatte 8 Spannstücke 45 zugeordnet. Als Halter für diese Spannstücke dient eine in einer Aussparung der Halteplatte 8 angeordnete Scheibe 46 zusammen mit einem Deckel 47. Der Deckel 47 ist mit Schrauben 48 sowohl mit der Halteplatte 8 als auch mit der Scheibe 46 verbunden. In paralleler Erstreckung zu den Seitenflächen 50 der Scheibe 46 sind Gewindebohrungen 51 in die Scheibe 46 eingebracht, die federende Druckstücke 52 aufnehmen. Sie drücken in ihrer entlasteten Stellung die Spannstücke 45 in die in Figur 6a, die eine Ansicht der Figur 2 in Pfeilrichtung 53 zeigt, dargestellte Position. In dieser Position ist ihre Spannweite 54 kleiner als der Aussendurchmesser der Hülse 2. Über Lappen 49, die seitlich von den Spannstücken 45 auskragen, sind die Spannstücke 45 während ihrer Verschiebebewegung zwischen einer Seitenfläche der Scheibe 46 und einer Aussparung im Deckel 47 gleitend geführt. Ein Verkanten ist daher ausgeschlossen. Scheibe 46, Spannstücke 45, Deckel 47 und federnde Druckstücke 52 bilden eine an der Halteplatte 8 stationär angebrachte Spannvorrichtung 63.

Anhand der Figuren 6 bis 9 wird die Funktion der Einrichtung erläutert.

Nach Figur 6 sind die Spannbacken 36 der Haltevorrichtung 25 in Pfeilrichtung 55 in ihre Offenstellung gefahren. Die Hülse 2 wird von Hand oder mit einer nicht dargestellten Greifzange durch das konisch erweiterte Führungsstück 37 in den Spannbereich der Haltevorrichtung 25 geschoben. Über ein nicht dargestelltes Steuerpult erfolgt über die Spannzylinder 29, 30 die Schliessbewegung der Spannbacken 36 in Pfeilrichtung 56 (Fig. 7). Die Hülse 2 befindet sich somit in der in Figur 7 gezeigten Position und wird von der Haltevorrichtung 25 gehalten.

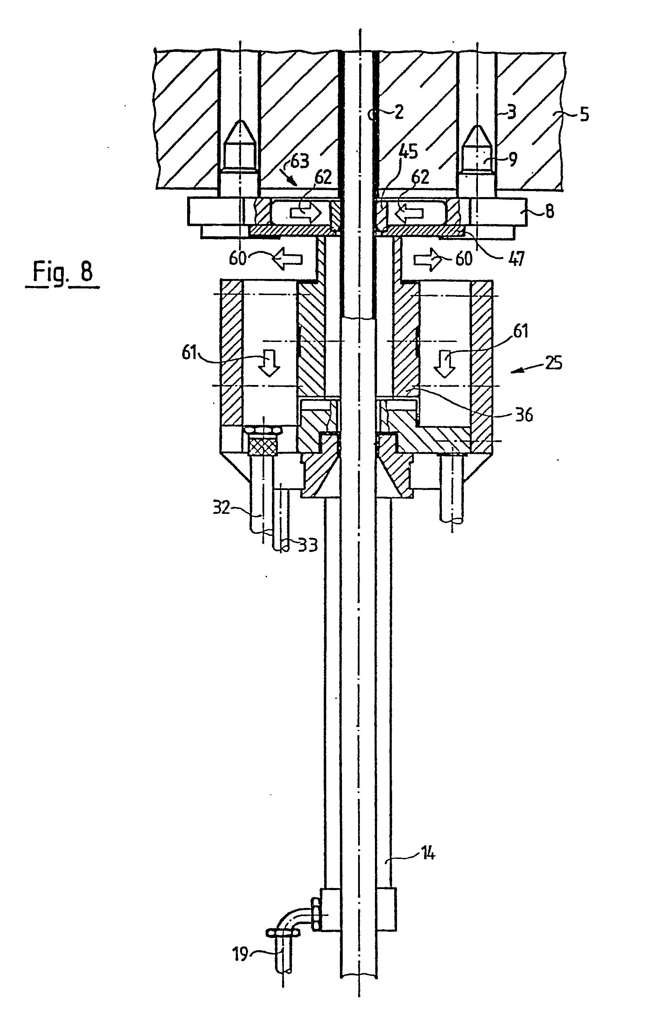

Es erfolgt nun der erste Teilhub der Haltevorrichtung 25, den sie durch Ansteuerung des kolbenstangenlosen Zylinders 14 in Pfeilrichtung 57 ausführt. Die Hülse 2 stösst dabei im Bereich der Anschrägung (konische Erweiterung) 58 an die Spannstücke 45. Gegen die Kraft der federnden Spannstücke 52 (Figur 2) werden die Spannstücke 45 von der Hülse 2 auseinander geschoben, so dass die Hülse unter gleitender Reibung gegenüber den Spannflächen der Spannstücke 45 in ein Rohr 3 des Dampferzeugers 4 eingeschoben wird. Der Teilhub wird so lange fortgeführt, bis die Stirnseite 59 der Spannbacken 36 gegen den Deckel 47 der Halteplatte 8 stösst (Figur 8). Der Verlauf des Teilhubes wird durch eine nicht dargestellte Fernsehkamera überwacht und seine Beendigung durch ebenfalls nicht dargestellte Endschalter gesteuert.

Die Figur 8 zeigt nun, dass nach Beendigung eines Teilhubes die Spannbacken 36 der Haltevorrichtung 25 in Pfeilrichtung 60 öffnen, um ohne die Hülse den Rückhub in Pfeilrichtung 61 auszuführen. Durch die in Pfeilrichtung 62 wirkenden federnden Druckstücke 52 werden die Spannstücke 45 der stationär angebrachten Spannvorrichtung 63 zwangsläufig gegen die Umfangsfläche der Hülse 2 gedrückt und halten somit dieselbe in ihrer nach dem Teilhub erreichten Position. Damit beim ersten Teilhub die Hülse 2 überhaupt an die stationär ausgebildete Spannvorrichtung 63 übergeben werden kann, ist es beim Einführen der Hülse in die in Achsrichtung der Dampferzeugerrohre bewegbare Haltevorrichtung 25 erforderlich, dass sie ein bestimmtes Mass über den Stirnseiten 59 der Spannbacken 36 vorsteht (Figur 7).

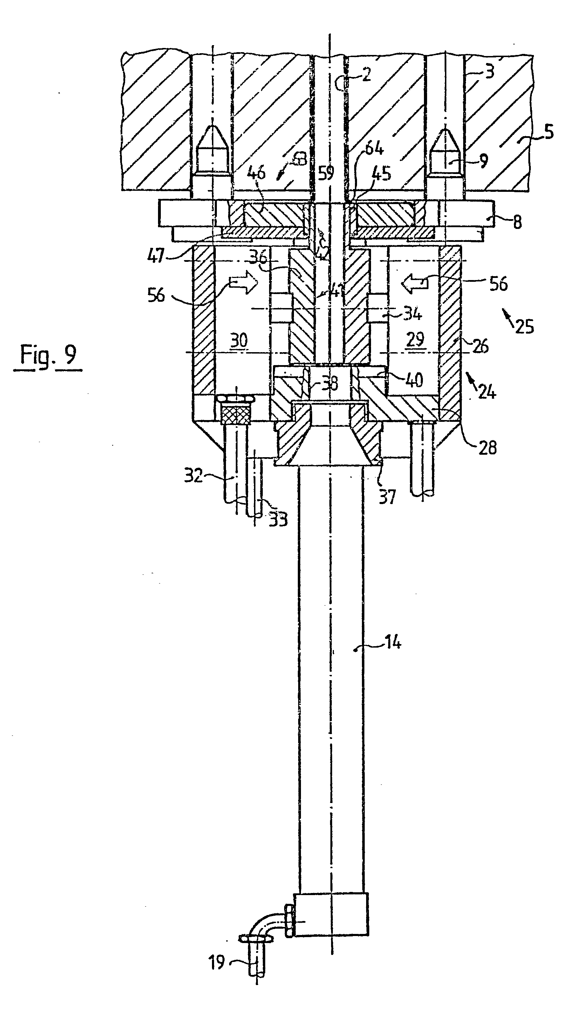

Nach Beendigung des Rückhubes greifen die Spannbacken 36 wieder die Hülse 2 und schieben sie in einem weiteren Teilhub unter Überwindung der Reibung zwischen Spannstücken 45 und Hülse 2 weiter in ein Dampferzeugerrohr 3 ein. Die Federkraft der Druckstücke 52 ist dabei so ausgelegt, dass sie ein Durchschieben der Hülse 2 ermöglichen und während des Rückhubes der Haltevorrichtung 25 die Hülse 2 in ihrer Position halten. Die Teilhübe werden in der beschriebenen Weise so lange fortgeführt, bis nach einem Rückhub die Stirnseiten 59 der Spannbacken 36 unter das untere Ende der Hülse 2 zu greifen vermögen. Die Spannbacken 36 werden dabei in die anhand der Figur 5 beschriebene Stellung zusammengefahren. Der Aussendurchmesser des abgesetzten Teilbereiches 42 der Spannbacken 36 nimmt dabei ein Mass ein, das grösser wie der Innendurchmesser eines Dampferzeugerrohres 3 ist. Vorzugsweise ist der Aussendurchmesser des abgesetzten Teilbereiches 42 so gross wie derjenige eines Dampferzeugerrohres 3. Bei dem letzten nun auszuführenden Teilhub kommen die Stirnseiten 59 der Spannbacken 36 gegen die in der Regel mit einer Bördelung 64 versehene Unterseite der Hülse 2 zum Anliegen. Die Haltevorrichtung 25 nimmt dann am Ende dieses letzten Teilhubes die in Figur 9 gezeigte Stellung ein. Die zusammengefahrenen Spannbacken 36 der Haltevorrichtung 25 haben dabei nach dem Anlaufen an die Abschrägung 58 der Spannstücke 45 der stationär angebrachten Spannvorrichtung 63 die Spannstücke 45 durchfahren, bis die Bördelung 64 der Hülse 2 an der Stirnseite des Dampferzeugerrohres 3 zur Anlage kommt. Bei der Verwendung einer Hülse 2 ohne Bördelung wird der Teilhub so lange fortgeführt, bis die Stirnseiten 59 der Spannbacken 36 an die Stirnseite des Dampferzeugerrohres 3 zur Anlage kommen. Mit dem Durchfahren der Spannstücke 45 durch die Spannbacken 36 wird eine exakte Positionierung des unteren Hülsenendes relativ zur Stirnseite eines im Rohrboden 5 endenden Dampferzeugerrohres 3 erzielt. Etwa auf einer Länge von 10 mm ist der Aussendurchmesser des unteren Endes der Hülse 2 mit nicht dargestellten Noppen versehen, die ein leichtes Verklemmen zwischen dem Dampferzeugerrohr 3 und der Hülse 2 hervorrufen. Diese Verklemmung hält die Hülse nach dem Wegfahren der Haltevorrichtung 25 in ihrer Position, bis sie durch Schweissen an dem Dampferzeugerrohr 3 befestigt wird.

In vorteilhafter Weise ist durch Lösen der Schrauben 48 (Figur 2) die gesamte stationär ausgebildete Spannvorrichtung 63 zu entnehmen. Der dadurch entstehende Freiraum um das mit der Hülse 2 bestückte Dampferzeugerrohr 3 erlaubt ein Verschweissen der Hülse mit Hilfe einer anstelle der Spannvorrichtung 25 über die Prismenführung 23 einsetzbaren Schweisseinrichtung.

*Bezugszeichenliste*

| 1 | Einrichtung |
|---|---|
| 2 | Hülse |
| 3 | Rohr |
| 4 | Dampferzeuger |
| 5 | Rohrboden |

*Bezugszeichenliste* (Fortsetzung)

| | |
|---|---|
| 6 | Kammer |
| 7 | Öffnung |
| 8 | Halteplatte |
| 9 | Zentrierstift |
| 10 | Zentrierteller |
| 11 | Aufnahmebohrung |
| 12 | Manipulator |
| 13, 16, 17, 31, 35, 48 | Schrauben |
| 14 | Zylinder |
| 15 | Lasche |
| 18 | Kupplungsstück |
| 19, 20, 32, 33 | Pneumatikanschluss |
| 21 | Konsole |
| 22 | Platte |
| 23 | Prismenführung |
| 24 | Gehäuse |
| 25 | Haltevorrichtung |
| 26 | Seitenplatte |
| 27 | Frontplatte |
| 28 | Grundplatte |
| 29, 30 | Spannzylinder |
| 34 | Kolbenstange |
| 36 | Spannbacke |
| 37 | Führungsstück |
| 38 | Bohrung |
| 39 | Mittenachse |
| 40 | Nut-/Federverbindung |
| 41, 43 | Teilbereich |
| 43, 53, 55, 56, 57, 60, 61, 62 | Pfeilrichtung |
| 44 | Schlitzbreite |
| 45 | Spannstücke |
| 46 | Scheibe |
| 47 | Deckel |
| 49 | Lappen |
| 50 | Seitenfläche |
| 51 | Gewindebohrung |
| 52 | Druckstück |
| 54 | Spannweite |
| 58 | Anschrägung |
| 59 | Stirnseite |
| 63 | stationäre Spannvorrichtung |
| 64 | Bördelung |

## Patentansprüche

1. Einrichtung zum Einbringen einer Hülse (2) in ein Rohr (3) eines Dampferzeugers (4), das in einem von einer Kammer (6) begrenzten Rohrboden (5) endet, die über eine Öffnung (7) zugänglich ist, wobei die Einrichtung aus einer relativ zum Rohrboden (5) festlegbaren Halteplatte (8) und einer entlang dieser Halteplatte in Achsrichtung des Rohres (3) bewegbaren Haltevorrichtung (25) für die Hülse (2) besteht, dadurch gekennzeichnet, dass die bewegbare Haltevorrichtung (25) Spannbacken (36) aufweist und in die Halteplatte (8) eine stationäre Spannvorrichtung (63) integriert ist, deren Spannstücke (45) die gleiche Mittenachse (39) wie die Spannbacken (36) der bewegbaren Haltevorrichtung (25) aufweisen und die zur Aufnahme einer Hülse (2) durch federnde Druckstücke (52) mit senkrecht zur Mittenachse (39) wirkender Federkraft betätigbar ist, dass die Spannbacken der bewegbaren Haltevorrichtung (25) einen dem Rohrboden zugewandten abgesetzten Teilbereich (42) aufweisen und bei nicht im Spannbereich befindlicher Hülse (2) so weit zusammenfahrbar sind, dass der Aussendurchmesser dieses Teilbereiches grösser als der Innendurchmesser und gleich gross wie der Aussendurchmesser eines Rohres (3) ist.

2. Einrichtung nach Anspruch 1, dadurch gekennzeichnet, dass die Halteplatte (8) einen kolbenstangenlosen druckmittelbetätigten Zylinder (14) trägt, dessen Kolben über eine umfangsseitig vom Zylinder auskragende Konsole (21) mit der in Achsrichtung der Rohre (3) bewegbaren Haltevorrichtung (25) lösbar verbunden ist.

3. Einrichtung nach Anspruch 1 oder 2, dadurch gekennzeichnet, dass die stationär angebrachte Spannvorrichtung (63) in einem Einsatz angeordnet ist, der an der Halteplatte (8) lösbar befestigt ist.

4. Einrichtung nach einem der Ansprüche 1 bis 3, dadurch gekennzeichnet, dass die Halteplatte (8) mit auswechselbaren Zentrierelementen (9, 10) oder einem Spreizfinger bestückt ist.

5. Einrichtung nach einem der Ansprüche 1 bis 4, dadurch gekennzeichnet, dass jedes Spannstück (45) schalenförmig ausgebildet ist und von seiner Aussenkontur auskragende Lappen (49) aufweist, die in Führungsschlitzen der Halteplatte (8) ragen.

6. Einrichtung nach Anspruch 1, dadurch gekennzeichnet, dass die Spannbacken (36) in einem Gehäuse (24) der in Achsrichtung der Rohre (3) bewegbaren Haltevorrichtung (25) angeordnet sind und während ihrer Verstellbewegung relativ zum Gehäuse (24) formschlüssig geführt sind.

7. Einrichtung nach einem der Ansprüche 1 bis 6, dadurch gekennzeichnet, dass sie über einen am Zylindermantel angreifenden Kupplungsteil von einem in der Kammer (6) befindlichen Manipulator (12) oder von wenigstens einem Spreizfinger getragen ist, der von der Halteplatte (8) auskragend in ein Rohr (3) ragt.

8. Verfahren zum Einbringen der Hülse (2) in das im Rohrboden (5) des Dampferzeugers (4) endende Rohr (3) mit einem in der Kammer (6) angeordneten Einrichtung nach Anspruch 1 bis 7, gekennzeichnet durch nachfolgend aufgeführte Schritte:

a) die Hülse (2) wird durch die Öffnung (7) bei geöffneten Spannbacken (36) der vertikal bewegbaren Haltevorrichtung (25) so weit eingeschoben, bis die Hülse (2) mit einem vorgebbaren Bereich in Richtung der stationären Spannvorrichtung (63) über die Spannbacken (36) hinausragt,

b) die Spannbacken (36) werden an die Hülse (2) angelegt, und die Haltevorrichtung (25) führt einen Einbringhub aus, bis der über die Spannbacken (36) hinausragende Bereich von den Spannstücken (45) der stationären Spannvorrichtung (63) erfasst wird,

c) die Spannbacken (36) der Haltevorrichtung (25) werden geöffnet, und ein Rückhub der Haltevorrichtung (25) wird durchgeführt,

d) die Spannbacken (36) der Haltevorrichtung (25) werden an die Hülse (2) angelegt, und die Haltevorrichtung (25) führt einen weiteren Einbringhub durch,

e) sobald nach einem Rückhub die Spannbacken (36) der Haltevorrichtung (25) in eine die Hülse (2) untergreifende Stellung zusammengefahren werden, erfolgt ein erneuter Einbringhub und bringt die Hülse (2) in eine mit der Unterkante des Rohrbodens (5) bündige Endstellung.

**Claims**

1. Apparatus for introducing a sleeve (2) into a tube (3) of a steam generator (4), the said tube terminating in a tube bottom (5) limited by a chamber (6) accessible via an orifice (7), the apparatus consisting of a retaining plate (8) fixable relative to the tube bottom (5) and of a holding device (25) moveable along this retaining plate in the axial direction of the tube (3) and intended for the sleeve (2), characterized in that the moveable holding device (25) has clamping jaws (36) and incorporated in the retaining plate (8) is a stationary clamping device (63), the clamping pieces (45) of which have the same centre axis (39) as the clamping jaws (36) of the moveable holding device (25) and which, for receiving a sleeve (2), is actuable by means of resilient pressure pieces (52) with a spring force exerted perpendicularly relative to the centre axis (39), and in that the clamping jaws of the moveable holding device (25) have a stepped part region (42) facing the tube bottom and, when the sleeve (2) is not located in the clamping region, can be moved together to such an extent that the outside diameter of this part region is larger than the inside diameter and equal to the outside diameter of a tube (3).

2. Apparatus according to Claim 1, characterized in that the retaining plate (8) carries a cylinder (14) which is without a piston rod and is actuated by means of a pressure medium and the piston of which is connected, via a bracket (21) projecting peripherally from the cylinder, to the holding device (25) moveable in the axial direction of the tubes (3) .

3. Apparatus according to Claim 1 or 2, characterized in that the clamping device (63) mounted in a stationary manner is arranged in an insert which is fastened releasably to the retaining plate (8).

4. Apparatus according to one of Claims 1 to 3, characterized in that the retaining plate (8) is equipped with exchangeable centering elements (9, 10) or with a spreading finger.

5. Apparatus according to one of Claims 1 to 4, characterized in that each clamping piece (45) is made shell-shaped and has tabs (49) projecting from its outer contour and reaching into guide slots of the retaining plates 68).

6. Apparatus according to Claim 1, characterised in that the clamping jaws (36) are arranged in a housing (24) of the holding device (25) moveable in the axial direction of the tubes (3) and are guided positively during their adjusting movement relative to the housing (24).

7. Apparatus according to one of Claims 1 to 6, characterized in that it is carried, via a coupling part engaging on the cylinder casing, by a manipulator (12) located in the chamber (6) or by at least one spreading finger which, projecting from the retaining plate (8), reaches into a tube (3).

8. Process for introducing the sleeve (2) into the tube (3) terminating in the tube bottom (5) of the steam generator (4) by means of an apparatus according to Claim 1 to 7 arranged in the chamber (6). characterized by the steps listed below:

a) with the clamping jaws (36) of the vertically moveable holding device (25) opened, the sleeve (2) is pushed in through the orifice (7) until the sleeve (2) projects with a predeterminable region beyond the clamping jaws (36) in the direction of the stationary clamping device (63),

b) the clamping jaws (36) are laid against the sleeve (2) and the holding device (25) executes an introduction stroke, until the region projecting beyond the clamping jaws (36) is grasped by the clamping pieces (45) of the stationary clamping device (63),

c) the clamping jaws (36) of the holding device (25) are opened, and a return stroke of the holding device (25) is executed,

d) the clamping jaws (36) of the holding device (25) are laid against the sleeve (2), and the holding device (25) executes a further introduction stroke,

e) as soon as, after a return stroke, the clamping jaws (36) of the holding device (25) are brought together into a position engaging under the sleeve (2), a new introduction stroke takes place and brings the sleeve (2) into a final position flush with the lower edge of the tube bottom (5).

**Revendications**

1. Dispositif pour l'introduction d'une douille (2) dans un tube (3) d'un générateur de vapeur (4), qui se termine dans un fond tubulaire (5) limité par une chambre (6) qui est accessible par une ouverture (7), le dispositif étant constitué par une plaque de maintien (8) pouvant être fixée par rapport au fond tubulaire (5), et par un dispositif de maintien (25) pour la douille, déplaçable dans le sens axial du tube (3) par rapport à cette plaque de maintien, caractérisé en ce que le dispositif de maintien (25) déplaçable possède des mâchoires de serrage (36) et que dans la plaque de maintien (8) est intégré un dispositif de serrage (63) stationnaire, dont les pièces de serrage (45) possèdent le même axe médian (39) que les mâchoires de serrage (36) du dispositif de maintien (25) déplaçable et qui peut être actionné en vue de la reception d'une douille (2) par des pièces de pression (52) élastiques avec une force de ressort agissant perpendiculairement à l'axe médian (39), que les mâchoires de serrage du dispositif de maintien (25) déplaçable possèdent une zone partielle (42) étagée topurnée vers le fond de tube et, lorsque la douille (2) ne se trouve pas dans la zone de serrage, peuvent être rapprochées de telle manière que le diamètre extérieur de cette zone partielle soit supérieur au diamètre intérieur et égal au diamètre extérieur d'un tube (3).

2. Dispositif selon la revendication 1, caractérisé en ce que la plaque de maintien (8) porte un cylindre (14) à fluide sous pression sans tige de piston, dont le piston est relié de façon libérable au dispositif de maintien (25) déplaçable dans le sens axial des tubes, par une console (21) faisant saillie sur la périphérie du cylindre.

3. Dispositif selon la revendication 1 ou 2, caractérisé en ce que le dispositif de serrage (63) monté de façon stationnaire est disposé dans une partie qui est fixée de façon libérable sur la plaque de maintien (8).

4. Dispositif selon l'une quelconque des revendications 1 à 3, caractérisé en ce que la plaque de maintien (8) est pourvue d'éléments de centrage (9, 10) échangéables ou d'un doigt à expansion.

5. Dispositif selon l'une quelconque des revendications 1 à 4, caractérisé en ce que chaque pièce de serrage (45) est réalisée en forme de coque et possède des languettes (49) faisant saillie sur son contour extérieur et pénétrant dans des feintes de guidage de la plaque de maintien (8).

6. Dispositif selon la revendication 1, caractérisé en ce que les mâchoires de serrage (36) sont disposées dans un carter (24) du dispositif de maintien (25) déplaçable dans le sens axial des tubes (3) et sont guidées pendant leur mouvement de réglage en complémentarité de forme par rapport au carter (24).

7. Dispositif selon l'une quelconque des revendications 1 à 6, caractérisé en ce qu'il est porté, par l'intermédiaire d'une partie d'accouplement en prise avec l'enveloppe du cylindre, par un manipulateur (12) se trouvant dans la chambre (6) ou par au moins un doigt à expansion qui fait saillie à partir de la plaque de maintien (8) et pénètre dans un tube (3).

8. Procédé pour l'introduction de la douille (2) dans le tube (3) se terminant dans le fond tubulaire (65) du générateur de vapeur (4), avec un dispositif suivant les revendications 1 à 7, installé dans la chambre (6), caractérisé par les étapes suivantes:

a) les mâchoires de serrage (36) du dispositif de maintien (25) déplaçable verticalement étant ouvertes, la douille (2) est introduite par l'ouverture (7) jusqu'à ce qu'elle dépasse les mâchoires de serrage (36) en direction du dispositif de serrage (63) stationnaire avec une zone pouvant être prédéterminée,

b) les mâchoires de serrage (36) sont appliquées contre la douille (2) et le dispositif de maintien (25) effectue une course d'introduction jusqu'à ce que la zone dépassant les mâchoires de serrage (36) soit saisie par les pièces de serrage (45) du dispositif de serrage (63) stationnaire,

c) les mâchoires de serrage (36) du dispositif de maintien (25) sont ouvertes et le dispositif de maintien (25) effectue une course de retour,

d) les mâchoires de serrage (36) du dispositif de maintien (25) sont appliquées contre la douille (2) et le dispositif de maintien (25) effectue à nouveau une course d'introduction,

e) dès qu'après une course de retour les mâchoires de serrage (36) du dispositif de maintien (25) sont rapprochées dans une position en-dessous de la douille (2), une nouvelle course d'introduction est effectuée qui amène la douille (2) dans une position finale alignée avec l'arête inférieure du fond tubulaire (5).

Fig. 1

Fig. 3

9

8

11

Fig. 4

8

11

10

Fig. 5

21

22

23

27

30    41    29

42    34

36

Fig. 5a

36

2

44

Fig. 6a

54

45

46

49

48

Fig. 6

Fig. 7

Fig. 8

Fig. 9